(19) Europäisches Patentamt
European Patent Office
Office européen des brevets

(11) EP 2 355 326 A1

(12) EUROPEAN PATENT APPLICATION

(43) Date of publication:
10.08.2011  Bulletin 2011/32

(51) Int Cl.:
H02M 3/335 (2006.01)    H02M 1/08 (2006.01)

(21) Application number: 10152116.9

(22) Date of filing: 29.01.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 30.09.2009  US 247299 P

(71) Applicants:
• IMEC
3001 Leuven (BE)
• Universiteit Gent
9000 Gent (BE)

(72) Inventors:
• Doutreloigne, Jan
9000, Gent (BE)
• Bakeroot, Benoît
9000, Gent (BE)

(74) Representative: Sarlet, Steven Renaat Irène et al
Gevers
Intellectual Property House
Holidaystraat 5
1831 Diegem (BE)

(54) **Synchronous rectifier circuit**

(57)  The present disclosure presents a circuit for converting a pulsed input voltage to a DC output voltage. The circuit comprises input nodes (21) for receiving the pulsed input voltage and output nodes (22) for outputting the DC output voltage. The circuit further comprises a first power transistor (23) and a second power transistor (24) connected between the input (21) and the output (22) nodes in a synchronous rectifier configuration. The first and second power transistors (23,24) each have a gate connected to a driving circuit (D1,D2,R1,R2,C1,C2,NPN1,NPN2,Z1,Z2,26) configured for alternately charging the gates of the power transistors whereby the driving circuit comprises an auxiliary circuit (26) not directly connected to the input nodes (21) and configured for providing a predetermined auxiliary supply voltage to the gates. Preferably, the auxiliary circuit comprises a buck DC-DC converter of which an input node (Vin) is connected to the output nodes (22) and of which an output node (Vout) is connected to the gates.

Figure 2

**Description**

**Field**

The present invention relates to a circuit for converting an input voltage into an output voltage. In particular, the invention relates to a rectifier in a voltage converter.

**Background art**

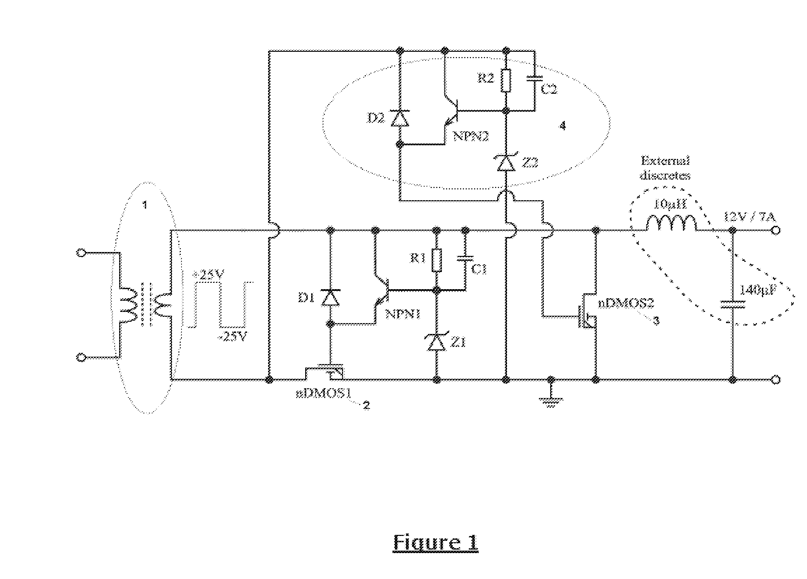

State-of-the-art isolated forward DC-DC converters contain a synchronous rectifier at the output of the pulse transformer (1) for the conversion of the pulsed AC signal into a stable DC output voltage (see figure 1). The 2 power DMOS transistors (2), (3) in the synchronous rectifier act like almost ideal rectifying diodes with a very small forward voltage drop, thereby exhibiting much lower static power dissipation than standard pn junction diodes. For charging and discharging the gate capacitance of the DMOS devices (to switch them on or off), an auxiliary circuit (4) is included in the system.

This auxiliary circuit contains a bipolar transistor and a zener diode that charge the gate capacitance of the DMOS device to a fixed voltage level (determined by the zener voltage) directly from the pulse transformer's output node. As the DMOS already reaches its minimum on-state resistance as soon as the gate voltage is slightly above threshold (for very low drain voltages), the zener voltage can be kept very low (typically a few volts), while the transformer's output voltage is rather high (typically tens of volts). This means that the DMOS gate electrode is charged to a low voltage from a much higher voltage source. Calculations show that this is a very power-inefficient way of charging a capacitor, and it results in considerable dynamic power losses in the bipolar transistors especially at very high switching frequencies.

A second problem is encountered when the gate electrodes of the 2 power DMOS transistors are being discharged to switch them off. This is done through a standard pn junction diode, resulting in a residual voltage of approximately 0.4V on the gate electrode. This residual voltage is not a problem in a discrete version of the synchronous rectifier as the DMOS devices have a sufficiently high threshold voltage, but when aiming at monolithic integration in an advanced smart-power IC technology where the DMOS devices normally have a threshold voltage only slightly above 0.4V, this residual gate voltage results in a non-negligible sub-threshold current. Since the voltage drop between source and drain in this off-state is several tens of volts while it's extremely small (below 100mV) in the on-state, this sub-threshold current represents a static power dissipation in the off-state that is comparable to the static power dissipation in the on-state. This is of course a significant waste of energy and reduces the overall power efficiency considerably.

**Disclosure of the invention**

It is an aim of the invention to provide a more power efficient circuit for converting a pulsed input voltage to a DC output voltage.

This aim is achieved according to the invention with the circuit showing the technical characteristics of claim 1.

The present disclosure presents a circuit for converting a pulsed input voltage to a DC output voltage. The circuit comprises input nodes for receiving the pulsed input voltage and output nodes for outputting the DC output voltage. The circuit further comprises a first power transistor and a second power transistor connected between the input and the output nodes in a synchronous rectifier configuration. The first and second power transistors each have a gate connected to a driving circuit configured for alternately charging the gates of the power transistors. The first and second power transistors have a threshold voltage. The driving circuit comprises an auxiliary circuit which is not directly connected to the input nodes and is configured for providing a predetermined auxiliary supply voltage to the gates, preferably a few volt above the threshold voltage of the power transistors, more preferably between 2 to 10 times the threshold voltage of the power transistors.

With "not directly connected to the input nodes" is meant that the auxiliary circuit is not immediately powered by the pulsed input voltage, but has another power source, for example the output voltage of the circuit (in which case the auxiliary circuit is connected to the output nodes, so indirectly connected to the input nodes as there is at least one component in between) or an independent power source.

By charging the gate capacitance of the power transistors via this auxiliary supply voltage, dynamic power losses in the transistors can be reduced as a more optimal voltage for charging the gates can be selected.

In an embodiment, the auxiliary circuit has an input node connected to the output nodes of the main circuit and an output node connected to the gates of the power transistors. In this way, the auxiliary circuit takes power from the main circuit itself and the need for a separate power supply can be avoided.

In an embodiment, the auxiliary circuit is a buck DC-DC converter, which is preferred in view of high efficiency, but other types of converters are also possible.

In an embodiment, the first and second power transistors are DMOS transistors, which are preferred in view of their speed and efficiency, but other types of power transistors (e.g. bipolar) are also possible

In an embodiment, the circuit further comprises a control block arranged for controlling/adapting said auxiliary supply voltage on the basis of one or more input parameters. The input parameters may comprise at least one of the following: current, frequency, temperature.

In another embodiment, the circuit further comprises a back-up circuit arranged for powering on the auxiliary circuit upon start-up.

In another embodiment, the gates of said power transistors are grounded via gate discharging transistors configured for discharging the gates during off-state of their respective power transistor. In an embodiment, the gate discharging transistors comprise a first resp. second gate discharging transistor configured for discharging the gate of the first resp. second power transistor under control of the second resp. first power transistor. In an embodiment, the gate discharging transistors are driven via a buffer (e.g. one or more inverters) for discharging the gate of the power transistors. By discharging the gate of the power transistors (or removing residual voltage during switch off) the overall power efficiency can be improved considerably.

In an alternative embodiment of the invention, a voltage converter circuit for converting a first voltage to a DC output voltage is presented. The voltage converter circuit comprises a primary circuit having first nodes for receiving the first voltage, a pulse transformer having primary and secondary windings, the primary winding being connected to the primary circuit, the pulse transformer and the primary circuit together transforming the first voltage into a pulsed voltage, and a secondary circuit for forming the DC output voltage from the pulsed voltage, the secondary circuit being connected to the secondary winding. The secondary circuit is a circuit as described above for converting a pulsed input voltage to a DC output voltage, wherein the secondary circuit is connected to the secondary winding by means of the input nodes.

In an embodiment, the voltage converter circuit is a DC-DC voltage converter provided for forming the DC output voltage from a higher DC voltage as the first voltage. In an example, the voltage converter circuit is provided for converting a DC voltage of around 36-72 V as the first voltage into a DC voltage within the range of 1 to 12 V as the output voltage.

In an embodiment, the voltage converter circuit is an AC-DC converter provided for forming the DC output voltage from an AC voltage as the first voltage.

In an embodiment, the primary circuit and the secondary circuit are monolithic integrated circuits.

**Brief description of the drawings**

The invention will be further elucidated by means of the following description and the appended figures.

Figure 1 shows a prior art synchronous rectifier.
Figure 2 shows a version of a synchronous rectifier according to an embodiment of the invention.
Figure 3 illustrates the principle of dynamic power loss reduction.
Figure 4 shows a power-on backup circuit.
Figure 5 illustrates a preferred embodiment of a synchronous rectifier with reduced dynamic power losses and suppressed sub-threshold conduction according to the invention.
Figure 6 shows a schematic of a vertical DMOS.
Figure 7 shows a plot of the simulated output voltage at 1 MHz for M = 400.
Figure 8 shows simulation results of the (a) source-gate voltage, (b) source-drain voltage and (c) the drain current at 1 MHz for M = 400.
Figure 9 shows a plot of the power efficiency of the synchronous rectifier of figure 1 for different chip sizes and switching frequencies.
Figure 10 shows a schematic of a 12V to 4V buck converter.
Figure 11 illustrates the impact of nDMOS sub-threshold conduction on the power dissipation at 200kHz for M = 800.
Figure 12 shows a simulation of effective sub-threshold current suppression in nDMOS1 at 200kHz for M = 800.
Figure 13 shows a plot of the power efficiency of a synchronous rectifier according to an embodiment for different chip sizes and switching frequencies.

**Detailed description of preferred embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

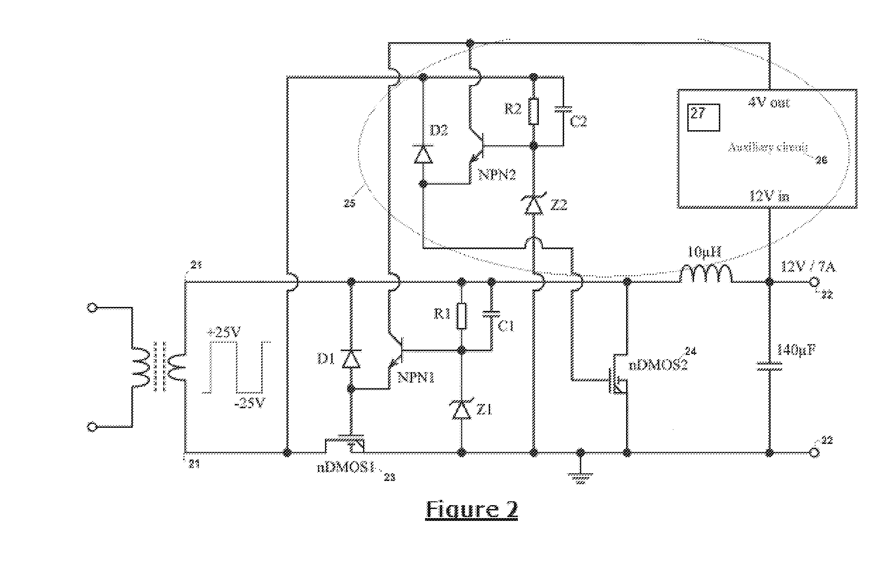

In order to reduce the dynamic power losses in the bipolar transistors, a synchronous rectifier architecture is proposed below in which the charging of the DMOS gate capacitance is no longer done directly from the pulse transformer's output node, but from an auxiliary supply voltage which is better suited than the input voltage. Figure 2 illustrates a circuit for converting a pulsed input voltage to a DC output voltage. The circuit comprises input nodes (21) for receiving the pulsed input voltage and output nodes (22) for outputting the DC output voltage. A first (23) and a second (24) power transistor (nDMOS1 and nDMOS2), each having a threshold voltage, are connected between the input and the output nodes in a synchronous rectifier configuration, the first and second power transistors each having a gate connected to a driving circuit (25) configured for alternately charging the gates of the power transistors. The driving circuit further comprises an auxiliary circuit (26) decoupled from (being not directly connected to) the input nodes and configured for providing a predetermined auxiliary supply voltage.

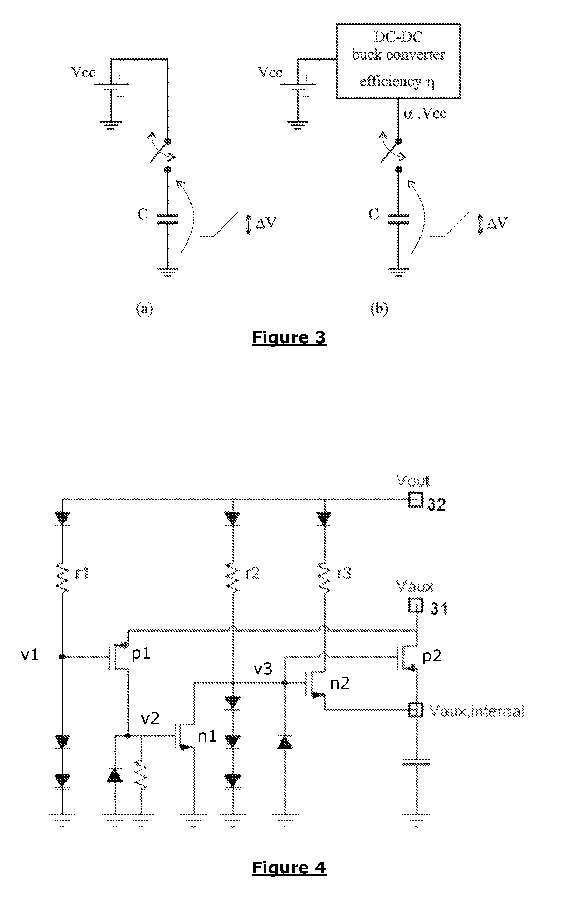

The main dynamic losses of a synchronous rectifier are the result of the charging and discharging of the switching transistors' gate capacitance. When looking at the way the gate capacitance of the nDMOS transistors is being charged by the NPN bipolar transistors in the circuit of Figure 1, it becomes clear that this is done very inefficiently. Indeed, the gate of the nDMOS devices is charged through the NPN devices from a high power supply (the voltage across the secondary winding of the pulse transformer). From an energetic point of view, this is a very bad strategy. To illustrate this and to show how we can improve things considerably, let's have a look at Figure 3. In circuit (a), the capacitor C is charged an amount $\Delta V$ from a much higher supply voltage $V_{cc}$ through some solid-state switch. A very simple calculation shows that the corresponding energy $\Delta E$ delivered by the supply voltage $V_{cc}$ is given by:

$$\Delta E \;\; = \;\; C \cdot V_{cc} \cdot \Delta V$$

In configuration (b), however, the supply voltage $V_{cc}$ is first down-converted to a level $\alpha * V_{cc}$ slightly above the needed range $\Delta V$, and this is done by means of a power-efficient auxiliary voltage converter having a high efficiency $\eta$. The energy delivered by the source $V_{cc}$ will be given by:

$$\Delta E \;\; = \;\; \frac{\alpha \cdot C \cdot V_{cc} \cdot \Delta V}{\eta}$$

This approach is interesting for boosting the power efficiency of the synchronous rectifier at high switching frequencies (e.g 300 kHz to 5 MHz) and/or for large nDMOS devices (e.g with gate capacitances from a few nF). In this way, the original circuit from Figure 1 is transformed into the improved circuit of Figure 2. In this new version, the auxiliary supply voltage is not directly derived from the transformer voltage, but from the auxiliary circuit instead, which is in this case powered by means of the output voltage of the synchronous rectifier.

Furthermore, the conductive losses of the synchronous rectifier are dependent on the characteristics of the switching transistors and definitely dependent on the gate-source voltage $\Delta V$. Therefore both dynamic and conductive losses are linked to $\Delta V$, and thus to the auxiliary supply voltage. Depending on the load current, frequency, temperature and other parameters, the voltage $\Delta V$ that minimizes the overall loss will vary. Therefore a control loop (27) can be implemented depending on any number of parameters to define a parameter dependent charging voltage instead of a fixed one.

If a fixed auxiliary supply voltage is used and the output voltage is adequate, then the gates can be driven by using the output voltage.

In general any power supply (e.g. buck and/or boost converter) can be used where the output voltage of this auxiliary power supply can be controlled (manually or) via a control loop.

One should note that this auxiliary power supply can be externally provided independent to the described circuit and present at startup.

If an independent auxiliary power supply is not present during power-on or if the auxiliary power supply is also dependent on the input voltage of the synchronous rectifier (e.g. from a separate transformer winding or derived from the synchronous rectifier's output or ...), the auxiliary DC supply voltage can be too low (below threshold). The synchronous rectifier can then entirely rely on the built-in drain-bulk diode of the DMOS devices for the signal rectification. Normally this power-on phase only takes a very short time. As soon as the auxiliary DC supply voltage has reached its stable value, the DMOS devices start to act as almost ideal rectifying diodes with extremely low conductive power dissipation in the on-state. In an embodiment, the auxiliary voltage further comprises a power-on backup. During the power-on phase, the dissipation will not be too high for the integrated circuit. In an embodiment, this voltage is also derived from the output voltage, has lower efficiency but kicks in as soon as the output voltage starts increasing. Once the auxiliary supply voltage is available the power-on backup can be switched off. A possible implementation of a power-on backup circuit is illustrated in Figure 4.

The Vaux node (31) is decoupled by a large capacitor to buffer the peak currents occurring at switching times. In the proposed circuit both backup power-on supply and the steady state auxiliary supply voltage (Vaux) use the same decoupling capacitor, keeping the external component count low. At startup Vaux will be low and p1 will be off. As Vout (32) rises, v1 rises too and p1 remains off. Therefore v2 will be pulled to ground and v3 will rise with Vout to the threshold defined by the diodes. This will switch on n2 and switch off p2. Note that the pDMOS transistor p2 is used reversely to avoid discharging of the decoupling capacitor through its bulk-drain diode. As n2 is on, the capacitor will be charged and vout provides a fast auxiliary supply voltage. When Vaux rises above v1 this will activate p1. The gate of n1 will be pulled high and as a result n1 pulls v3 to the ground, switching on p2 and switching off n2. This way the backup power-on supply voltage is effectively OR-ed from Vaux at all time, yet without the loss of a diode voltage drop as we used an active switch p2. Especially with low Vaux this is quite important. Note that the OR-ing to Vaux close to the IC is preferred, otherwise the whole capacitive load of the Vaux PCB node would have to be charged by the backup power-on supply.

When the backup power-on supply is on, the dissipation is given by (Vout-Vaux,internal)*$I_{average}$. The current drawn by the synchronous rectifier is used to charge the transistors' gates and given by:

$$I_{average} \quad = \quad \frac{2 \cdot C_{gate} \cdot V_{aux,internal}}{T_{synchr}}$$

As an example, with M=150 (number of basic cells) this gives $C_{gate} \approx 16.8nF$. For 1Mhz switching frequency and Vaux,internal = 3.3V we find an average current of approx. 110mA. This yields a dissipation of $\approx$ 1W. For higher frequencies the average current increases very fast. An external resistor $r_3$ can be used, lowering the IC dissipation.

When Vaux reaches a satisfactory level the backup power-on supply will be switched off and the only dissipation left is through $r_1$ and $r_2$. These can however be chosen much higher than $r_3$ and thus the static power dissipation is very low (order of 1mW).

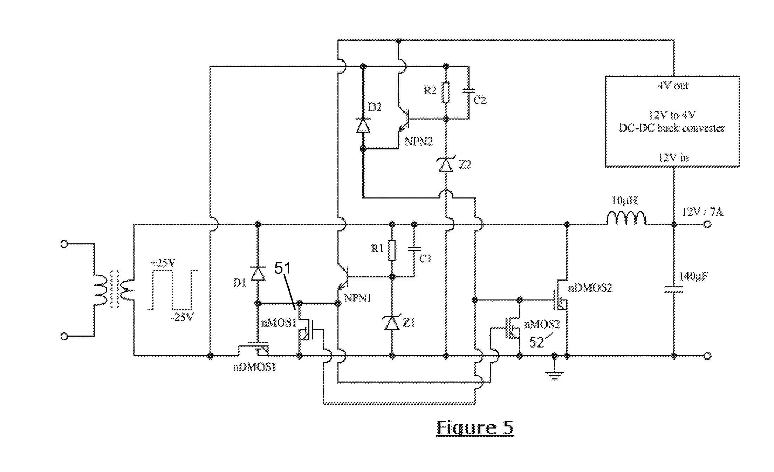

In an additional embodiment, 2 MOS transistors (51), (52) are added that completely discharge the gate electrode of the 2 power DMOS devices to zero volts to switch them off. The circuit is illustrated in Figure 5. The problem of sub-threshold conduction in the off-state is hereby solved. As the 2 DMOS devices are always driven in a complementary way, one can use the gate voltage of one DMOS device to activate the MOS transistor that has to discharge the gate electrode of the other DMOS device. One might drive the MOS discharge transistor independently from the DMOS devices. For example a buffered driving of the DMOS gate electrode via an inverter will also introduce a MOS discharging the gate and reducing sub-threshold currents. However this buffer can be driven from any logic signal, derived from any signal thought suitable or even created especially for this purpose. Adding a discharging MOS can substantially eliminate the sub-threshold conduction of the DMOS devices in the off-state and reduce the static power dissipation in the off-state to a completely negligible level.

**Implementation example:**

As an example, following list explains which devices have been selected in an 80V 0.35$\mu$m smart-power technology and what device parameters (mainly dimensions) have been used in the simulations and as illustrated in Figure 1:

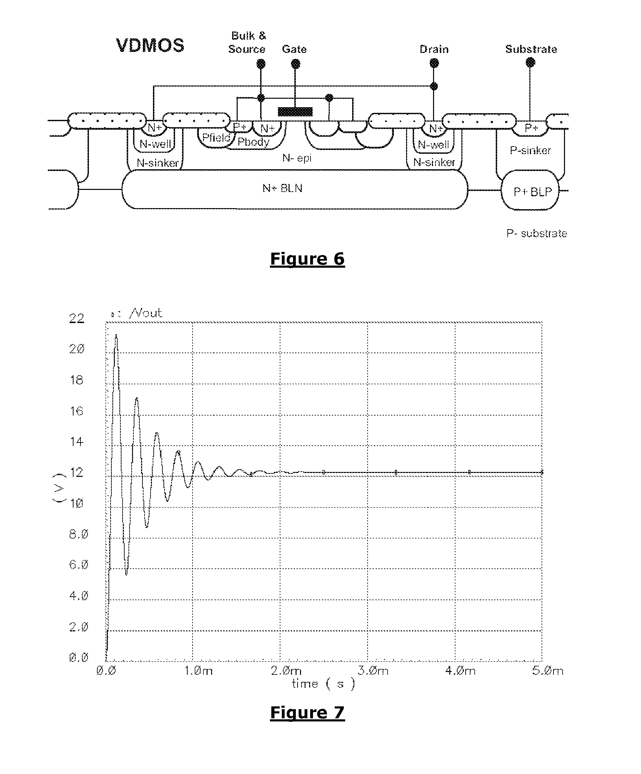

- DMOS1, nDMOS2 (example of vertical DMOS is given in fig.6): an 80V vertical floating n-type DMOS transistor. These transistors are actually formed as the parallel connection of a number M (a parameter called the Multiplier in the device model, and treated as a design variable in this exercise) basic unit cells. Each unit cell consists of 16 parallel channels of $500\mu m$ wide each, flanked by a drain plug to the n-type buried layer on both sides of the structure. This configuration consisting of M parallel unit cells of 16 parallel channels each actually yields the minimum specific on-state resistance of the device. For a smaller number of parallel channels in a unit cell, the drain overhead ("wasted" silicon area on both sides of the unit cell) deteriorates the specific on-state resistance. For a larger number of parallel channels in a unit cell, the extra series resistance in the n-type buried layer degrades the device performance. In this optimal configuration, both nDMOS1 and nDMOS2 transistors feature the following characteristics:

  - Total channel width = M * 8 mm
  - Silicon area = M * 0.054 mm$^2$
  - On-state resistance $R_{on}$ = 4.55 $\Omega$/M
  - Specific on-state resistance $R_{on}$ * area = 246 m$\Omega$ mm$^2$

- NPN1, NPN2: These NPN transistors, with a typical current gain in the range from 50 to 100 for the current levels used in this circuit, are formed as the parallel connection of 100 basic unit cells, where each unit cell has an active emitter area of 7 * 7 $\mu m^2$ (these dimensions are imposed by the technology itself). The NPN1 and NPN2 transistors have a silicon area of 0.46 mm$^2$ each.
- D1, D2: an 80V PN junction diode. Both components consist of 20 elementary diodes connected in parallel, where each elementary diode has an active junction area of $2.6\mu m$ long (imposed by the technology) and $200\mu m$ wide. The D1 and D2 diodes have a silicon area of 0.57 mm$^2$ each.
- Z1, Z2: These components are not really zener diodes, but a chain of 5 normally biased diodes connected in series, thereby yielding an equivalent "zener voltage" of 5 diode threshold voltages ($\approx$ 4V in total). In such a chain, each diode is actually formed as 2 elementary cells in parallel, each elementary cell having an active junction area of 2.6 $\mu m$ * 200 $\mu m$. Both Z1 and Z2 components have a silicon area of 0.29 mm$^2$ each.
- R1, R2: highly Ohmic poly-silicon resistors of 2 k$\Omega$. The required silicon area is negligible.
- C1, C2: metal 2 - metal 2.5 capacitors of 200 pF. Each capacitor needs about 0.13 mm$^2$ silicon area.

Figure 7 illustrates the typical output voltage of the synchronous rectifier (with a 1.7$\Omega$ load resistor) after start-up. This simulation reveals a strong transient (overshoot + damped oscillation) until about 2.5ms after start-up. All other signals exhibit a very similar behavior during the same time interval.

As we are interested in the power efficiency of the synchronous rectifier under steady-state conditions, the simulation of Figure 7 suggests that we should consider the signals from 2.5ms onwards only. In fact, we calculated the power efficiency on the basis of the average input and output power by monitoring the accumulated energy (delivered by the pulse transformer at the input of the circuit and consumed by the 1.7$\Omega$ load resistor at the output) during the time interval [3ms , 5ms], and dividing this accumulated energy by the total interval duration of 2ms.

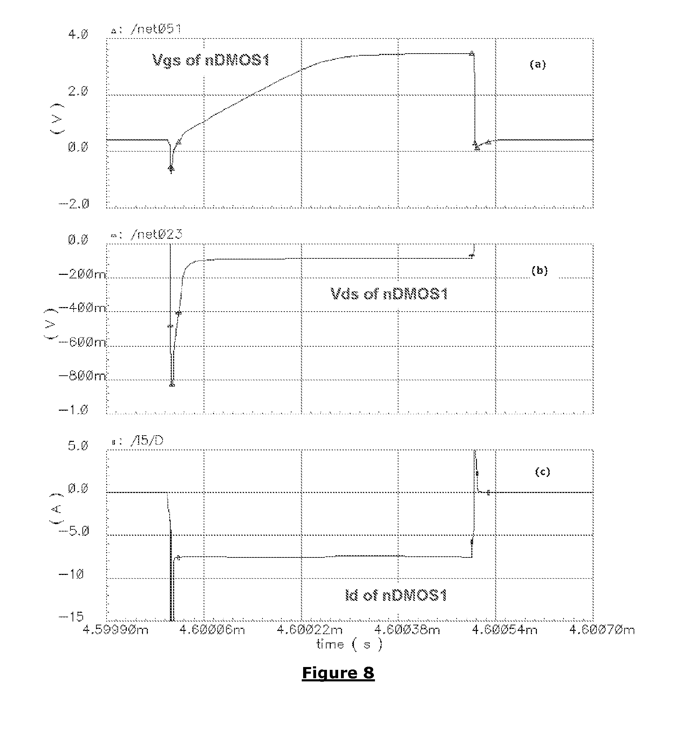

The correct operation of the circuit can easily be derived from Figure 8, showing the source-gate (a) and source-drain (b) voltages as well as the drain current (c) of the nDMOS1 transistor during turn-on in steady-state circumstances. At the beginning of the pulse, the load current of approximately 7A is flowing entirely through the built-in drain-bulk diode of the device, yielding a source-drain voltage of about -0.8V. At the same time, the gate capacitance is being charged through the NPN1 transistor, and the conducting channel is rapidly taking over all current from the built-in drain-bulk diode. Very soon, the source-drain voltage reaches a stable level of only -80mV (this level is inversely proportional to the design variable M), resulting in a very low static power dissipation in the device. The contribution of the -0.8V peak in the power dissipation of nDMOS1 is rather small (especially at moderate values of M and the switching frequency) thanks to the presence of capacitor C1 and the large bipolar transistor NPN1 as they keep the -0.8V peak duration very short. For nDMOS2, almost identical curves are obtained.

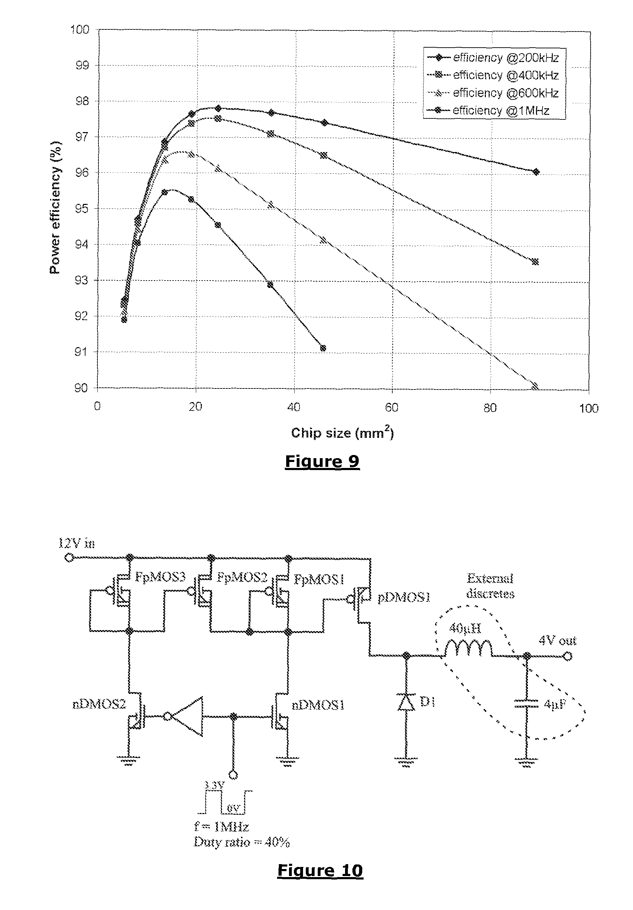

Table 1 shows how the simulated power efficiency of the synchronous rectifier depends on the channel width of the nDMOS1 and nDMOS2 transistors and the switching frequency. Figure 9 contains exactly the same information in a graphical format, but the nDMOS1 and nDMOS2 channel width has been converted into the total chip area. Note that this chip area contains the contribution of all active and passive components on the die, but not the silicon area needed for the bonding pads and interconnection (mainly between the nDMOS source and drain electrodes and the bonding pads).

**Table 1: Simulated power efficiency of the basic synchronous rectifier for different nDMOS sizes and switching frequencies.**

| Multiplier M nDMOS | Power efficiency (%) | | | |
|---|---|---|---|---|
| | @ 200kHz | @ 400kHz | @ 600kHz | @ 1MHz |
| 25 | 92,5 | 92,3 | 92,1 | 91,9 |
| 50 | 94,7 | 94,6 | 94,4 | 94,0 |
| 100 | 96,9 | 96,7 | 96,4 | 95,5 |
| 150 | 97,6 | 97,4 | 96,5 | 95,3 |
| 200 | 97,8 | 97,5 | 96,1 | 94,6 |
| 300 | 97,7 | 97,1 | 95,1 | 92,9 |
| 400 | 97,4 | 96,5 | 94,2 | 91,1 |
| 800 | 96,1 | 93,5 | 90,1 | 84,4 |

The shape of the curves in Figure 9 is actually quite logical. Initially, the power efficiency rises steeply for increasing values of the nDMOS channel width because the channel resistance and hence also the static power dissipation in the nDMOS are inversely proportional to this channel width. However, as the channel width goes up, also the gate capacitance of the nDMOS increases, thereby requiring more power in the NPN transistors to constantly charge this gate capacitance at the switching rate. At a certain critical value of the channel width, this dynamic dissipation in the NPN devices becomes more important than the static dissipation in the nDMOS devices, and from that point on, the power efficiency begins to drop. The higher the switching frequency, the sooner this critical point is reached (because the dynamic losses in the NPN transistors are proportional to the switching frequency) and the steeper the curve will drop.

The contribution of the static dissipation in the nDMOS and dynamic dissipation in the NPN devices is also clear from Table 2. Only for rather small values of the nDMOS channel width in combination with a moderate switching frequency, the static nDMOS dissipation is predominant. For very wide nDMOS channels and/or high switching frequencies, the dynamic NPN dissipation has the main impact on power efficiency.

**Table 2: Contribution of different transistors in the total power dissipation for different nDMOS sizes and switching frequencies.**

| Component | Average power dissipation (mW) | | |
|---|---|---|---|
| | M_nDMOS = 100 | M_nDMOS = 800 | M_nDMOS = 200 |
| | @ 200kHz | @ 200kHz | @ 1M Hz |
| nDMOS1 | **1120** | 360 | 890 |
| nDMOS2 | **1130** | 460 | 910 |
| NPN1 | 70 | **1240** | **1540** |
| NPN2 | 70 | **1240** | **1530** |

This table leads to following conclusion: for improving the power efficiency of the synchronous rectifier at high switching frequencies, it is preferred that the dynamic power losses in the NPN transistors are reduced without deteriorating the static losses in the nDMOS devices. In other words, a circuit solution that reduces the energy needed to charge the gate capacitance of the nDMOS devices without actually reducing the size of these devices.

**Synchronous rectifier with reduced dynamic power losses:**

Again referring to Figure 3, in circuit (a), the capacitor is charged an amount $\Delta V$ from a much higher supply voltage $V_{cc}$ through some solid-state switch. For example, $\Delta V$ is 3.5V, $V_{cc}$ is 25V, and the switch the NPN bipolar transistor. The supply voltage $V_{cc}$ is first down-converted to a level $\alpha * V_{cc}$ slightly above the needed range $\Delta V$, e.g. $\alpha * V_{cc} = 4V$ and this is done by means of a power-efficient DC-DC buck converter having an efficiency $\eta$ (e.g. 80%). We see that the energy consumption in configuration (b) is 5 times less than in the case of configuration (a).

An example of a 12V to 4V buck converter is shown in Figure 10. Transistor pDMOS1 is the main switch in this buck converter, while the other transistors form the level-shifter for driving the gate electrode of this switch. The voltage mirror nDMOS1 + FpMOS1, where nDMOS1 is driven by a 1MHz clock signal with 40% duty ratio and FpMOS1 acts as an active load, directly controls the source-gate voltage of pDMOS1. The additional voltage mirror nDMOS2 + FpMOS3, driven by the complementary clock signal, in combination with FpMOS2, effectively discharges the gate capacitance of pDMOS1 in order to avoid leakage current in the switch during the off-state. The chosen transistor types and dimensions are as follows:

- DMOS1: an 80V lateral floating pDMOS. It consists of 20 basic unit cells, each having a single channel of 500$\mu$m wide.
- nDMOS1, nDMOS2: an 80V vertical floating nDMOS.

  - nDMOS1 has 2 parallel channels of 40$\mu$m wide
  - nDMOS2 has 2 parallel channels of 10$\mu$m wide

- FpMOS1, FpMOS2, FpMOS3: a floating low-voltage pMOS.

  - FpMOS1 has a single channel, 0.35$\mu$m long and 30$\mu$m wide
  - FpMOS2 has a single channel, 0.35$\mu$m long and 100$\mu$m wide
  - FpMOS3 has a single channel, 0.35$\mu$m long and 10$\mu$m wide

The simple circuit of Figure 10 converts the 12V into 4V at approximately 80% power efficiency for the output current levels that are needed to drive the 2 NPN bipolar transistors in the synchronous rectifier of Figure 2.

The impact of this technique to reduce the dynamic switching losses is evidenced by the simulated data in Table 3. In those situations where the dynamic losses in the NPN devices were predominant in the power consumption of the original circuit (for very large nDMOS devices and/or high switching frequencies), the introduction of this new technique makes the dynamic losses in the NPN devices only marginal compared to the static losses in the nDMOS transistors. Note that the additional average power consumption of the active components in the 12V to 4V DC-DC buck converter is about 170mW in the simulations of Table 3.

**Table 3: Impact of dynamic loss reduction on transistor power dissipation and global power efficiency.**

| | Average power dissipation (mW) | | | |
|---|---|---|---|---|
| Component | M_nDMOS = 800 , @ 200kHz | | M_nDMOS = 200 , @ 1MHz | |
| | Basic circuit | Improved circuit | Basic circuit | Improved circuit |
| nDMOS1 | 360 | 370 | 890 | 850 |
| nDMOS2 | 460 | 510 | 910 | 860 |
| NPN1 | **1240** | **160** | **1540** | **180** |
| NPN2 | **1240** | **160** | **1530** | **180** |
| Global power efficiency | **96,1%** | **98,1%** | **94,6%** | **97,0%** |

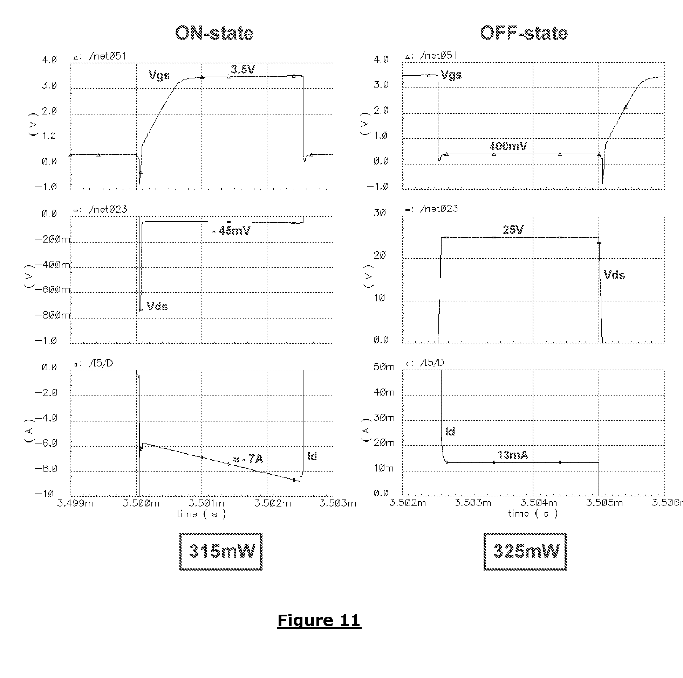

The power efficiency can improve even more by focusing on the reduction of the static dissipation in the nDMOS transistors. Thorough investigation of the nDMOS behaviour shows that the nDMOS is dissipating as much power during the off-state as during the on-state. The cause can be found in unexpected sub-threshold conduction of the nDMOS. Indeed, when nDMOS2 is activated (acting as freewheeling diode for the load current), its drain potential reaches a value of typically 50 to 100mV below ground (depending on the actual channel width). As a consequence, the gate electrode of nDMOS1 is discharged through diode D1 to a level at one diode threshold above the drain potential of nDMOS2. In other words, the gate of nDMOS1 is not entirely discharged to ground but to a level of approximately 0.4V. This is only slightly below the threshold voltage, which is typically 0.5V for the chosen transistor type. Due to the very wide transistor channel, this gate voltage triggers a considerable sub-threshold current of the order of several mA. As the source-drain voltage of nDMOS1 is roughly 25V at that moment, this sub-threshold current can easily cause a static power dissipation of several hundreds of mW, comparable to the static power consumption during the on-state of the device (when the drain current is much higher, around 7A, and the drain voltage much lower, somewhere in the range from 50 to 100mV). This is confirmed by the simulation results in Figure 11, proving that the static dissipation in the off-state of the nDMOS can indeed be as large as during the on-state of the device.

**Synchronous rectifier with reduced dynamic power losses and suppressed sub-threshold conduction:**

As the 2 transistors operate in a complementary way, the one being turned off when the other is turned on, we can use the gate signal of one nDMOS to discharge the gate electrode of the other, simply by adding a pair of small low-voltage nMOS transistors. This leads to the schematic of Figure 5.

When nDMOS2 is activated, its gate being charged to about 3.5V, the additional transistor nMOS1 will be turned on, resulting in the complete discharging of the gate electrode of nDMOS1. Exactly the same occurs in the opposite situation. The 2 extra devices nMOS1 and nMOS2 are for example standard low-voltage nMOS transistors, having a single channel of 0.35μm long and 100μm wide.

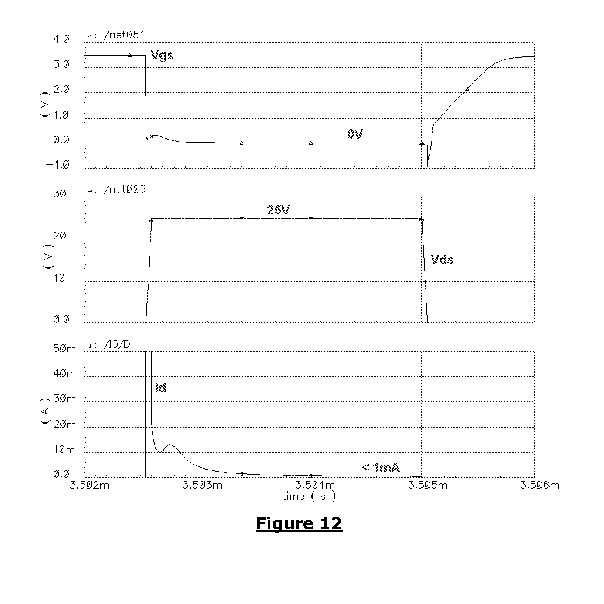

The effectiveness of this technique to avoid sub-threshold conduction is visible in the simulation results of Figure 12. We see that the gate electrode of the nDMOS is now completely discharged to 0V instead of sticking at a 0.4V level, and that the corresponding drain current has dropped to less than 1mA instead of the 13mA in the simulations of Figure 11.

Table 4 shows the impact of this technique on the power consumption of the individual transistors and the global power efficiency. The static power dissipation in the nDMOS devices has dropped significantly as there is almost no dissipation in the off-state anymore.

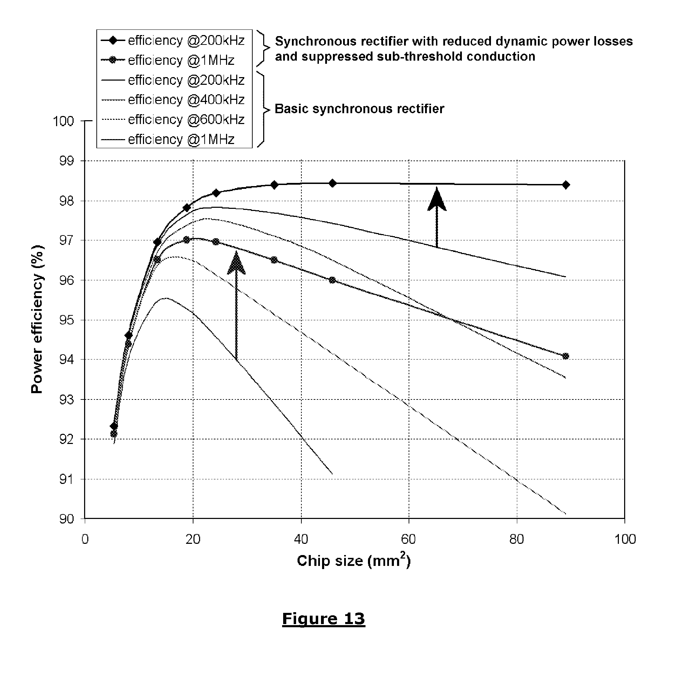

Table 5 represents the simulated global power efficiency of the synchronous rectifier in Figure 5 for different nDMOS channel dimensions and switching frequencies. Exactly the same information, where the nDMOS channel dimensions have been converted into the corresponding chip size, is gathered in a graphical way in Figure 13. This graph also contains the data from the original circuit in Figure 1. A comparison reveals the superior performance of the circuit from Figure 5. When looking at a switching frequency of 1MHz (it was a primary concern to increase the frequency far above the currently used 300kHz), the original circuit yielded a maximum power efficiency of 95.5%, whereas the introduction of the techniques for dynamic power loss reduction and suppression of sub-threshold conduction boosts the power efficiency to 97.0%. At frequencies above 1MHz, the power efficiency increase would be even more pronounced.

**Table 4: Impact of sub-threshold current suppression on transistor power dissipation and global power efficiency.**

| Component | Average power dissipation (mW) M_nDMOS = 800 , @ 200kHz | |
|---|---|---|
| | <u>Without</u> sub-threshold current suppression | <u>With</u> sub-threshold current suppression |
| nDMOS1 | **370** | **250** |
| nDMOS2 | **510** | **270** |
| NPN1 | 160 | 160 |
| NPN2 | 160 | 160 |
| Global power efficiency | **98,1** | **98,4** |

**Table 5: Simulated power efficiency of the synchronous rectifier with reduced dynamic power losses and suppressed sub-threshold conduction for different nDMOS sizes and switching frequencies.**

| Multiplier M nDMOS | Power efficiency (%) | |
|---|---|---|
| | @200kHz | @1MHz |
| 25 | 92,3 | 92,1 |
| 50 | 94,6 | 94,4 |
| 100 | 97,0 | 96,5 |
| 150 | 97,8 | 97,0 |
| 200 | 98,2 | 97,0 |
| 300 | 98,4 | 96,5 |
| 400 | 98,4 | 96,0 |

(continued)

| Multiplier M nDMOS | Power efficiency (%) | |
|---|---|---|
| | @200kHz | @1MHz |
| 800 | 98,4 | 94,1 |

**Claims**

1. A circuit for converting a pulsed input voltage to a DC output voltage, comprising:

   input nodes (21) for receiving said pulsed input voltage and output nodes (22) for outputting said DC output voltage; and
   a first power transistor (23) and a second power transistor (24) connected between the input and the output nodes in a synchronous rectifier configuration, the first (23) and second (24) power transistors each having a gate connected to a driving circuit (25) configured for alternately charging the gates of the power transistors, said first and second power transistors having a threshold voltage,

   **characterized in that** the driving circuit (25) comprises an auxiliary circuit (26) not directly connected to said input nodes and configured for providing a predetermined auxiliary supply voltage to said gates.

2. A circuit according to claim 1, wherein said predetermined auxiliary supply voltage is between 2 to 10 times the threshold voltage of the power transistors.

3. A circuit according to claim 1 or 2, wherein said auxiliary circuit has an input node connected to said output nodes and an output node connected to said gates.

4. A circuit according to any one of claims 1-3, wherein said auxiliary circuit is a buck DC-DC converter.

5. A circuit according to any one of the previous of claims, wherein said first and second power transistors are DMOS transistors.

6. A circuit according to any one of the previous claims, further comprising a control block (27) arranged for controlling/ adapting said auxiliary supply voltage on the basis of input parameters.

7. A circuit according to claim 6, wherein said input parameters comprise at least one of the following: current, frequency, temperature.

8. A circuit according to any one of the previous claims, further comprising a back-up circuit arranged for powering on said auxiliary circuit upon start-up.

9. A circuit according to any one of the previous claims, wherein said gates of said power transistors are grounded via gate discharging transistors configured for discharging said gates during off-state of their respective power transistor.

10. A circuit according to claim 9, wherein said gate discharging transistors comprise a first resp. second gate discharging transistor configured for discharging the gate of the first resp. second power transistor under control of the second resp. first power transistor.

11. A circuit according to claim 9, wherein said gate discharging transistors are driven via a buffer for discharging the gate of said power transistors.

12. A voltage converter circuit for converting a first voltage to a DC output voltage, comprising:

    a primary circuit having first nodes for receiving said first voltage;
    a pulse transformer having a primary and secondary windings, the primary winding being connected to said primary circuit, the pulse transformer and the primary circuit together being provided for transforming said first voltage into a pulsed voltage;

a secondary circuit for forming said DC output voltage from said pulsed voltage, the secondary circuit being connected to said secondary winding;

**characterized in that** the secondary circuit is a circuit according to any one of the previous claims, the secondary circuit being connected to said secondary winding by means of said input nodes.

**13.** A voltage converter circuit according to claim 12, being a DC-DC voltage converter provided for forming said DC output voltage from a higher DC voltage as said first voltage.

**14.** A voltage converter circuit according to claim 13, provided for converting a DC voltage of around 36-72 V as said first voltage into a DC voltage within the range of 1 to 12 V as said output voltage.

**15.** A voltage converter circuit according to claim 12, being an AC-DC converter provided for forming said DC output voltage from an AC voltage as said first voltage.

**16.** A voltage converter circuit according to any one of the claims 12-15, wherein said primary circuit and said secondary circuit are monolithic integrated circuits.

**Amended claims in accordance with Rule 137(2) EPC.**

**1.** A circuit for converting a pulsed input voltage to a DC output voltage, comprising:

input nodes (21) for receiving said pulsed input voltage and output nodes (22) for outputting said DC output voltage; and
a first power transistor (23) and a second power transistor (24) connected between the input and the output nodes in a synchronous rectifier configuration, the first (23) and second (24) power transistors each having a gate connected to a driving circuit (25) configured for alternately charging the gates of the power transistors, said first and second power transistors having a threshold voltage, the driving circuit (25) comprising an auxiliary circuit (26) not directly connected to said input nodes and configured for providing a predetermined auxiliary supply voltage to said gates, **characterized in that** said auxiliary circuit has a power input node connected to said output nodes, for being powered by means of said DC output voltage, and a power output node connected to said gates, for supplying said predetermined auxiliary supply voltage to said gates.

**2.** A circuit according to claim 1, wherein said predetermined auxiliary supply voltage is between 2 to 10 times the threshold voltage of the power transistors.

**3.** A circuit according to any one of claims 1-2, wherein said auxiliary circuit is a buck DC-DC converter.

**4.** A circuit according to any one of the previous of claims, wherein said first and second power transistors are DMOS transistors.

**5.** A circuit according to any one of the previous claims, further comprising a control block (27) arranged for controlling/adapting said auxiliary supply voltage on the basis of input parameters.

**6.** A circuit according to claim 5, wherein said input parameters comprise at least one of the following: current, frequency, temperature.

**7.** A circuit according to any one of the previous claims, further comprising a back-up circuit arranged for powering on said auxiliary circuit upon start-up.

**8.** A circuit according to any one of the previous claims, wherein said gates of said power transistors are grounded via gate discharging transistors configured for discharging said gates during off-state of their respective power transistor.

**9.** A circuit according to claim 8, wherein said gate discharging transistors comprise a first resp. second gate discharging transistor configured for discharging the gate of the first resp. second power transistor under control of the second resp. first power transistor.

**10.** A circuit according to claim 8, wherein said gate discharging transistors are driven via a buffer for discharging the gate of said power transistors.

**11.** A voltage converter circuit for converting a first voltage to a DC output voltage, comprising:

a primary circuit having first nodes for receiving said first voltage;
a pulse transformer having primary and secondary windings, the primary winding being connected to said primary circuit, the pulse transformer and the primary circuit together being provided for transforming said first voltage into a pulsed voltage;
a secondary circuit for forming said DC output voltage from said pulsed voltage, the secondary circuit being connected to said secondary winding;

**characterized in that** the secondary circuit is a circuit according to any one of the previous claims, the secondary circuit being connected to said secondary winding by means of said input nodes.

**12.** A voltage converter circuit according to claim 11, being a DC-DC voltage converter provided for forming said DC output voltage from a higher DC voltage as said first voltage.

**13.** A voltage converter circuit according to claim 12, provided for converting a DC voltage of around 36-72 V as said first voltage into a DC voltage within the range of 1 to 12 V as said output voltage.

**14.** A voltage converter circuit according to claim 11, being an AC-DC converter provided for forming said DC output voltage from an AC voltage as said first voltage.

**15.** A voltage converter circuit according to any one of the claims 11-14, wherein said primary circuit and said secondary circuit are monolithic integrated circuits.

**Figure 1**

Figure 2

**Figure 3**

**Figure 4**

**Figure 5**

**Figure 6**

**Figure 7**

**Figure 8**

**Figure 9**

**Figure 10**

**Figure 11**

**Figure 12**

**Figure 13**

Europäisches
Patentamt

European
Patent Office

Office européen
des brevets

# EUROPEAN SEARCH REPORT

Application Number

EP 10 15 2116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/279967 A1 (SHAO GELIANG [JP] ET AL) 14 December 2006 (2006-12-14) | 1-3,5,8, 12-14 | INV. H02M3/335 H02M1/08 |
| Y | * paragraphs [0023] - [0034], [0047] - [0059]; figures 1-3,5 * | 6,7,15 | |
| X | US 2002/057586 A1 (TAKAHASHI NAOKI [JP]) 16 May 2002 (2002-05-16) * paragraphs [0029], [0030], [0072] - [0090]; figures 1,2 * | 1-3,5, 9-14 | |
| X | EP 0 665 634 A1 (SIEMENS AG [DE]) 2 August 1995 (1995-08-02) * column 5, line 23 - column 6, line 15; figure 3 * | 1-3,5,9, 12 | |
| X | US 6 061 255 A (CHIK WONG SIU [HK] ET AL) 9 May 2000 (2000-05-09) * column 3, line 43 - column 5, line 67; figure 2 * | 1-3,5,9, 12 | |
| Y | US 2008/232141 A1 (ARTUSI DANIEL A [US] ET AL) 25 September 2008 (2008-09-25) * paragraph [0045]; figure 3 * | 6,7,15 | **TECHNICAL FIELDS SEARCHED (IPC)** H02M H03K |

The present search report has been drawn up for all claims

| Place of search | Date of completion of the search | Examiner |
|---|---|---|
| Munich | 8 June 2010 | Braccini, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 10 15 2116

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2010

| Patent document cited in search report | | Publication date | Patent family member(s) | | Publication date |
|---|---|---|---|---|---|
| US 2006279967 | A1 | 14-12-2006 | NONE | | |
| US 2002057586 | A1 | 16-05-2002 | JP | 2002153054 A | 24-05-2002 |
| EP 0665634 | A1 | 02-08-1995 | AT<br>DE | 153196 T<br>59402749 D1 | 15-05-1997<br>19-06-1997 |
| US 6061255 | A | 09-05-2000 | NONE | | |
| US 2008232141 | A1 | 25-09-2008 | NONE | | |

EPO FORM P0459

For more details about this annex : see Official Journal of the European Patent Office, No. 12/82